# EUROPÄISCHE PATENTSCHRIFT

(11) **EP 2 127 050 B1**
(45) Veröffentlichungstag und Bekanntmachung des Hinweises auf die Patenterteilung: **22.01.2014**
(21) Anmeldenummer: 07847282.6
(22) Anmeldetag: 22.11.2007
(51) Int. Cl.: H02G 15/007, H02G 3/04

(54) **AUFNAHMEVORRICHTUNG FÜR ZUMINDEST EINEN LÄNGLICHEN GEGENSTAND, INSBESONDERE EIN KABEL**
ACCOMMODATING APPARATUS FOR AT LEAST ONE ELONGATE ARTICLE, IN PARTICULAR A CABLE
DISPOSITIF D'ACCUEIL POUR AU MOINS UN OBJET ALLONGÉ, NOTAMMENT UN CÂBLE

(30) Priorität: 22.12.2006 DE 102006061213
(43) Veröffentlichungstag der Anmeldung: 02.12.2009
(73) Patentinhaber: BSH Bosch und Siemens Hausgeräte GmbH, 81739 München (DE)
(72) Erfinder: DIETRICH, Mike, 15848 Bornow (DE); GATZ, Lars-Olaf, 15370 Fredersdorf (DE)
(86) Internationale Anmeldenummer: PCT/EP2007/062714
(87) Internationale Veröffentlichungsnummer: WO 2008/077700

(56) Entgegenhaltungen:
- EP-A- 0 056 898
- US-A- 5 675 128
- US-A1- 2004 159 454

## Beschreibung

Die Erfindung betrifft eine Aufnahmevorrichtung für zumindest einen länglichen Gegenstand, insbesondere ein Kabel oder ein Rohr, mit einem kanalförmigen Grundkörper, welcher einen Aufnahmebereich zum bereichsweisen Aufnehmen des länglichen Gegenstands aufweist, und einem zum Abdecken des Aufnahmebereichs an dem Grundkörper angeordneten Oberteil.

Es sind aus US 2004 / 0 159 454 A1, US 6 575 128 A oder EP 56 898 A1 Kabelhalter bekannt, die aus einem Grundkörper und einem unlösbar mit dem Grundkörper verbundenen, bewegbaren Oberteil bestehen. Bei solchen Kabelhaltern dient das Oberteil zur Fixierung eines Kabels im Grundkörper und kann selbst am Grundkörper arretiert werden.

Ein Kabelkanal zur Aufnahme von Kabelbündeln ist aus der EP 0 555 687 A1 bekannt. Der Kabelkanal ist einstückig ausgebildet und umfasst einen schienenartigen bzw. kanalartigen Grundkörper, welcher im Querschnitt ein U-Profil aufweist. An einem vertikalen Schenkel dieses Grundkörpers sind zwei beabstandet zueinander angebrachte Oberteile über ein Filmscharnier an diesem Grundkörper befestigt. Die den Grundkörper nur teilweise abdeckenden Oberteile sind an dem Filmscharnier gegenüberliegenden Enden mit Rasteinrichtungen ausgebildet, welche am gegenüberliegenden vertikalen Schenkel des Grundkörpers zum lediglich teilweisen Verschließen des Kabelkanals eingreifen können. Darüber hinaus ist in dem Grundkörper eine Leitungsfixierung ausgebildet, welche aus flexiblen strangartigen Bändern besteht, welche an einem vorderen Bereich ein sägezahnartiges Profil aufweisen. Diese Bänder können von außen gegriffen werden und durch Ziehen an diesen Bändern kann eine in dem Grundkörper eingebrachte Mehrzahl an Kabeln zusammengeschnürt werden. Die Bänder verformen sich und legen sich an das Kabelbündel an. Jedes strangartige Band ist ursprünglich sowohl an dem Grundkörper als auch an dem Oberteil befestigt, von dem Oberteil für das weitere Funktionsprinzip und insbesondere die Fixierung der Kabel jedoch abtrennbar. Dieses strangartige Band muss zur Fixierung des Kabelbündels von diesem Oberteil abgetrennt werden, um ein Zusammenschnüren dieses Kabelbündels erreichen zu können. Durch diese Ausgestaltung kann die Verwendung der Anordnung in ihrer ursprünglichen Ausgestaltung praktisch nur einmal gewährleistet werden. Darüber hinaus kann es bei diesen zwingend erforderlichen Abtrennungen dieser Kabelbänder auch zu Beschädigungen des gesamten Elements und somit des Kabelkanals kommen, wodurch dieser in seiner Funktion beeinträchtigt oder sogar zerstört werden kann. Mit diesem bekannten Kabelkanal sind zur endgültigen Fixierung der Kabel mehrere unabhängige Vorgänge durchzuführen, und dazu sind mehrere separate Elemente des Kabelkanals zu betätigen. Nicht zuletzt kann durch diesen bekannten Kabelkanal die Fixierung auch nur relativ unzureichend gewährleistet werden.

Daher ist es Aufgabe der vorliegenden Erfindung, eine Aufnahmevorrichtung zu schaffen, mit welcher zumindest ein länglicher Gegenstand schnell und positionsgenau fixiert werden kann.

Diese Aufgabe wird durch eine Aufnahmevorrichtung, welche die Merkmale nach Patentanspruch 1 aufweist, gelöst.

Eine erfindungsgemäße Aufnahmevorrichtung für zumindest einen länglichen Gegenstand, insbesondere ein Kabel und/oder einem Rohr, umfasst einen kanalförmigen Grundkörper, welcher einen Aufnahmebereich zum zumindest bereichsweisen Aufnahmen des länglichen Gegenstands umfasst. Sie weist des Weiteren ein Oberteil auf, welches zum Abdecken des Aufnahmebereichs ausgebildet ist und an dem Grundkörper angeordnet ist. In dieses Oberteil ist unlösbar eine bewegbare Fixierungsvorrichtung zum Fixieren des länglichen Gegenstands integriert, wobei diese Fixierungsvorrichtung eine Arretierungseinrichtung aufweist, die zur Arretierung zumindest der Fixierungsvorrichtung an dem Grundkörper ausgebildet ist. Durch das Anordnen dieser Fixierungsvorrichtung und der darin enthaltenen Arretierungseinrichtung zusammen an dem Oberteil kann die Betätigung der Aufnahmevorrichtung im Hinblick auf ein schnelles und positionsgenaues Halten des länglichen Gegenstands in der Aufnahmevorrichtung verbessert werden. Die untrennbare Verbindung zwischen dem Oberteil und der integrierten Fixierungsvorrichtung ermöglicht ein reversibles gleichwirkendes Funktionsprinzip der Komponenten. Abrisskanten oder funktionsbeeinträchtigende oder sogar funktionshindernde Abtrennungen können dadurch vermieden werden und dennoch die Fixierung der Gegenstände verbessert werden.

Das Oberteil ist in bevorzugter Weise einstückig mit der Fixierungsvorrichtung und der Arretierungseinrichtung ausgebildet. Eine integrale Ausgestaltung dieser Komponenten der Aufnahmevorrichtung in dem Oberteil kann dadurch erreicht werden. Dadurch kann nicht nur die Handhabung und Betätigung vereinfacht werden, sondern auch die Herstellung kostengünstig und schnell ermöglicht werden. Insbesondere dann, wenn das Oberteil mit seinen integrierten Komponenten aus Kunststoff ausgebildet ist, kann die Ausgestaltung als Spritzgussteil ermöglicht werden.

Die Fixierungsvorrichtung und die Arretierungseinrichtung sind jeweils in sich und auch in Verbindung zueinander formstabile und im Wesentlichen starre Komponenten der Aufnahmevorrichtung.

Die Fixierungsvorrichtung und/oder die Arretierungseinrichtung sind im geschlossenen Zustand bevorzugt so ausgebildet, dass sie sich in den Aufnahmebereich hinein erstrecken, insbesondere vollständig in der Aufnahmevorrichtung angeordnet sind. Dadurch kann auch eine sehr Platz sparende Aufnahmevorrichtung geschaffen werden, an dessen Außenseite keine unerwünschten Komponenten sich erstrecken, wie dies beispielsweise im Stand der Technik der Fall ist. Platz sparender Einbau und darüber hinaus auch die Verringerung der Verletzungsgefahr kann dadurch erreicht werden.

Die Fixierungsvorrichtung umfasst in bevorzugter Weise einen Eingriffsbereich, durch welchen eine geschlossene Fixierungsvorrichtung von außen zugänglich geöffnet werden kann und/oder die Arretierungseinrichtung lösbar ist. Die Aufnahmevorrichtung kann somit auch sehr einfach wieder geöffnet werden, und die Arretierungen und/oder Fixierungen schnell gelöst werden. Die Ausgestaltung ist dabei derart gewählt, dass weder der aufzunehmende und zu fixierende längliche Gegenstand noch die Aufnahmevorrichtung selbst großen Krafteinwirkungen ausgesetzt wären und dadurch auch Beschädigungen vermieden werden können. Dabei ist vorzugsweise die Arretierungseinrichtung derartig ausgebildet, dass durch eine auf die zu fixierenden länglichen Gegenstände wirkende Zugkraft die Verbindung nicht lösbar ist. Somit kann ein ungewolltes Öffnen der Arretierungseinrichtung vermieden werden.

In bevorzugter Weise umfasst die Fixierungsvorrichtung ein plattenartiges Klappenelement, welches bewegbar an einer Basisplatte des Oberteils angeordnet ist. Diese Ausgestaltung ermöglicht eine relativ flache Ausbildung und gewährleistet dennoch eine hohe Stabilität der Fixierungsvorrichtung und der mechanischen Anordnung in dem Oberteil. Die Basisplatte ist bevorzugt so dimensioniert, dass sie den Aufnahmebereich im Wesentlichen vollständig abdeckt.

Der Eingriffsbereich ist in vorteilhafter Weise in dem Klappenelement ausgebildet. Dadurch kann örtlich fokussiert die Fixierungsvorrichtung betätigt werden und dennoch ein unmittelbar benachbarter Eingriffsbereich ausgebildet werden, durch welchen das Lösen durchgeführt werden kann. Allein mit einer Hand kann dadurch die gesamte Handhabung des Schließens und des Öffnens dieser Fixiervorrichtung und der Arretierungseinrichtung gewährleistet werden.

Das Klappenelement und die Basisplatte sind bevorzugt durch ein Scharnier, insbesondere ein Filmscharnier, verbunden. Dadurch kann eine mechanische unlösbare Verbindung zwischen den Elementen ermöglicht werden, welche dauerhaft funktionsfähig ist und einem relativ geringen Verschleiß ausgesetzt ist.

In bevorzugter Weise ist an der dem Aufnahmebereich zugewandten Seite des Klappenelements ein bügelartiges Halteelement zur Fixierung des länglichen Gegenstands angeordnet. Das bügelartige Halteelement ist in bevorzugter Weise über einen Haltesteg an dem plattenartigen Klappenelement befestigt. Bevorzugt ist hierbei eine einstückige Ausbildung vorgesehen. Das bügelartige Halteelement kann verschiedenste Formgebungen aufweisen und beispielsweise als Rundbogen in Halbkreisform ausgebildet sein. Dieser offene Bügel kann jedoch in einer umgedrehten U-Form oder insbesondere in einer umgedrehten V-Form bereitgestellt sein. Durch diese bügelartige Ausgestaltung kann eine Bündelung der darunter zu fixierenden länglichen Gegenstände allein schon durch die Formgebung dieses Halteelements erreicht werden. Der längliche Gegenstand wird dadurch zumindest von oben durch dieses bügelartige Halteelement bevorzugt zentriert fixiert und durch die Formgebung des Halteelements positionsgenau gehalten. Auch bei mehreren aufzunehmenden länglichen Gegenständen können diese durch die Formgebung dieses Halteelements bereits zusammengedrückt werden und dadurch fixiert werden. Durch dieses zumindest teilweise Umgreifen des oder der länglichen Gegenstände durch dieses bügelartige Halteelement kann ein seitliches Verrutschen des oder der Gegenstände verhindert werden.

Vorteilhaft ist eine Ausbildung des Klappenelements längs zum Grundkörper, wobei das Klappenelement über ein quer zum Grundkörper liegendes Scharnier einseitig mit der Basisplatte verbunden ist. Eine durch das Schließen des Klappenelements verursachte Drehung des Klappenelements um das Scharnier bewirkt, dass ein vorzugsweise entfernt zum Scharnier angeordnetes Halteelement auf die zu fixierenden länglichen Gegenstände einwirken kann. Eine derartige Weiterbildung verbessert ein Fixieren mehrerer länglicher Gegenstände, da durch eine solche Bewegung des am Klappenelement angeordnete Halteelement ein Ineinanderverschränken der länglichen Gegenstände fördert, wodurch die länglichen Gegenstände im Aufnahmebereich noch besser gebündelt werden können. Im geschlossenen Zustand der Fixierungsvorrichtung liegt das bügelartige Halteelement in vorteilhafter Weise einer durchgängigen Aussparung im Aufnahmebereich gegenüber. Die Fixierung und Halterung kann dadurch in allen Raumrichtungen in optimaler Weise eingestellt werden.

Bevorzugt ist die Arretierungseinrichtung als Rasteinrichtung ausgebildet, wobei die Rasteinrichtung in vorteilhafter Weise zumindest ein erstes längliches Rastelement mit zumindest einer Raststufe aufweist, welches an der Fixierungsvorrichtung angeordnet ist. Besonders günstig ist ein mehrstufig wirkendes Rastelement, welches insbesondere ein zum Verrasten angeordnetes sägezahnförmiges Profil aufweist. Das erste Rastelement ist im Wesentlichen als steifes, starres Element ausgebildet, das an zwei gegenüberliegenden Enden zum einen an dieser Fixierungsvorrichtung und zum anderen an dem bügelartigen Halteelement angeordnet sein kann. Abhängig von der Ausgestaltung der anderen Komponenten kann dieses Rastelement als stabförmiges Element ausgebildet sein. Es kann jedoch auch eine in vielfältige Weise ausgebildete andere Ausgestaltung vorgesehen sein. Insbesondere kann das Rastelement als gewinkeltes stabförmiges Element ausgebildet sein.

Bevorzugt ist dieses erste Rastelement mit einem an dem Klappenelement ausgebildeten Arm und mit dem bügelartigen Halteelement verbunden. Dieser Arm ist bevorzugt so an dem plattenartigen Klappenelement angeordnet, dass er eine Begrenzung des Eingriffsbereichs ausbildet. Dieses erste Rastelement ist in sich steif und im Wesentlichen unverformbar ausgebildet und angeordnet.

An dem Grundkörper ist bevorzugt zumindest ein Arretierungselement, insbesondere ein zweites längliches Rastelement, ausgebildet, welches zum Eingriff mit der Arretierungseinrichtung, welche an der Fixierungsvorrichtung angeordnet ist, ausgebildet ist. Das zweite Rastelement ist in vorteilhafter Weise an einem den Aufnahmebereich begrenzenden Steg ausgebildet und erstreckt sich im Wesentlichen vertikal zur Längsrichtung des Grundkörpers. Die Arretierungselemente, insbesondere die zweiten Rastelemente, sind bevorzugt ebenfalls als starre und mechanisch stabile Elemente ausgebildet.

In bevorzugter Weise sind an der Fixierungsvorrichtung zwei Rastelemente ausgebildet, welche gegenüberliegend so angeordnet sind, dass sie sich an gegenüberliegenden Seiten des in der Aufnahmevorrichtung zu fixierenden länglichen Gegenstands befinden. Die komplementären Rastelemente, welche an dem Grundkörper ausgebildet sind, sind dabei bevorzugt ebenfalls an gegenüberliegenden Wandbereichen, insbesondere an gegenüberliegenden Stegen angeordnet. Der längliche Gegenstand verläuft bei einer derartigen Ausgestaltung zwischen diesen Rastelementen, wodurch bei einer Arretierung der Fixierungsvorrichtung im Wesentlichen eine gleichmäßige Krafteinwirkung durch diese Arretierung mittels der Fixierungsvorrichtung auf diesen länglichen Gegenstand erzeugt werden kann.

Die ersten und die zweiten Rastelemente sind bevorzugt so ausgelegt, dass beim Arretieren oder Lösen der Arretierung auftretende Kräfte im Wesentlichen zu keiner Verformung der Rastelemente führen.

Der Grundkörper weist in bevorzugter Weise an gegenüberliegenden Enden in Längsrichtung betrachtet jeweils einen Auflagebereich auf. Auf diesem Auflagebereich kann der längliche Gegenstand einfach eingelegt werden. Bevorzugt sind diese Auflagebereiche als Senken ausgebildet und weisen somit ebenfalls einen bügelartigen Verlauf im Querschnitt auf. Auch hier kann beispielsweise eine U-Form oder insbesondere eine V-Form im Querschnitt ausgebildet sein. Insbesondere durch die V-Form kann beim Einlegen von mehreren länglichen Gegenständen wieder eine automatisch bewirkte Bündelung besonders gut erreicht werden.

In vorteilhafter Weise umfasst der Grundkörper zumindest ein Bodenelement, welches bevorzugt separiert und ohne Verbindung zu den Auflagebereichen ausgebildet ist, wobei an dem Bodenelement Stabilisierungselemente ausgebildet sind, welche in den Aufnahmebereich ragen. In Längsrichtung betrachtet ist somit zwischen den Auflagebereichen ein Bodenelement angeordnet, welches bevorzugt eine Mehrzahl stabartiger Elemente aufweist, wodurch die Fixierung und insbesondere das Verrutschen des länglichen Gegenstands in Längsrichtung und somit auch in Richtung der kanalartigen Ausgestaltung des Grundkörpers verhindert werden kann. Bevorzugt greifen die Fixierungsvorrichtung und insbesondere das bügelartige Halteelement zwischen diesen Auflagebereichen an den länglichen Gegenstand an und drückt diesen an diese Stabilisierungselemente an. In einer weiteren vorteilhaften Ausgestaltung sind in Längsrichtung betrachtet zumindest zwei Bodenelemente beabstandet zueinander angeordnet und weisen jeweils zumindest ein Stabilisierungselement auf, welches in den Aufnahmebereich hineinragt. Zwischen diesen beiden Bodenelementen ist bevorzugt die durchgängige Aussparung im Aufnahmebereich ausgebildet und in vorteilhafter Weise ist das bügelartige Halteelement so angeordnet, dass es sich im geschlossenen Zustand der Fixierungsvorrichtung in Längsrichtung betrachtet zwischen diesen beiden Bodenelementen und somit auch zwischen den jeweils daran angeordneten Stabilisierungselementen befindet. Die Fixierung des länglichen Gegenstands kann dadurch besonders vorteilhaft ausgebildet werden. Da der längliche Gegenstand somit zum einen durch die gegenüberliegenden Auflagebereiche gehalten wird und andererseits durch die Stabilisierungselemente im geschlossenen Zustand der Fixierungsvorrichtung fixiert werden sowie darüber hinaus durch die von der anderen Seite auf den länglichen Gegenstand oder die länglichen Gegenstände einwirkende Fixierungsvorrichtung, insbesondere das bügelartige Halteelement, gehalten wird, kann dieses insbesondere im Bereich der durchgängigen Aussparung durch das bügelartige Halteelement noch weiter nach unten gedrückt werden, wodurch die Fixierung nochmals verbessert werden kann.

Das Oberteil und der Grundkörper sind vorzugsweise mittels eines Filmscharniers verbunden. Dieses Filmscharnier erstreckt sich in vorteilhafter Weise in Längsrichtung des kanalartigen Grundkörpers zumindest teilweise über diese gesamte Länge dieses Randbereichs. Zur lösbaren mechanischen Verbindung und somit zum Aufklappen und Zuklappen des Oberteils relativ zum Grundkörper kann an der gegenüberliegenden Seite und somit am gegenüberliegenden Randbereich in Längsrichtung betrachtet zumindest eine lösbare Verbindung, insbesondere eine Rastmechanik, ausgebildet sein. Auch diese Rastmechanik kann Rastelemente aufweisen, welche in den jeweiligen Komponenten, dem Oberteil einerseits und dem Grundkörper andererseits integral ausgebildet sind. Vorzugsweise ist die lösbare Verbindung derartig ausgebildet, dass durch eine auf die zu haltenden länglichen Gegenstände wirkende Zugkraft die Verbindung nicht lösen kann beziehungsweise im Falle einer Rastmechanik die Rastelemente nicht entrastet werden können. Somit kann ein ungewolltes Öffnen des Oberteils vermieden werden.

In vorteilhafter Weise ist die gesamte Aufnahmevorrichtung einstückig ausgebildet, insbesondere aus Kunststoff gefertigt, wobei die Aufnahmevorrichtung beispielsweise als Spritzgussteil herstellbar ist.

Ein Ausführungsbeispiel der Erfindung wird nachfolgend anhand schematischer Zeichnungen näher erläutert. Es zeigen:
- Fig. 1: eine perspektivische Darstellung einer erfindungsgemäßen Aufnahmevorrichtung im geschlossenen Zustand;
- Fig. 2: eine perspektivische Darstellung der erfindungsgemäßen Aufnahmevorrichtung gemäß Fig. 1 im geöffneten Zustand einer Fixierungsvorrichtung der Aufnahmevorrichtung;
- Fig. 3.: eine Seitenansicht der Darstellung gemäß Fig. 2;
- Fig. 4: eine Vorderansicht der Darstellung gemäß Fig. 2; und
- Fig. 5: eine perspektivische Draufsicht auf einen Grundkörper der Aufnahmevorrichtung.

In den Figuren werden gleiche oder funktionsgleiche Elemente mit den gleichen Bezugszeichen versehen.

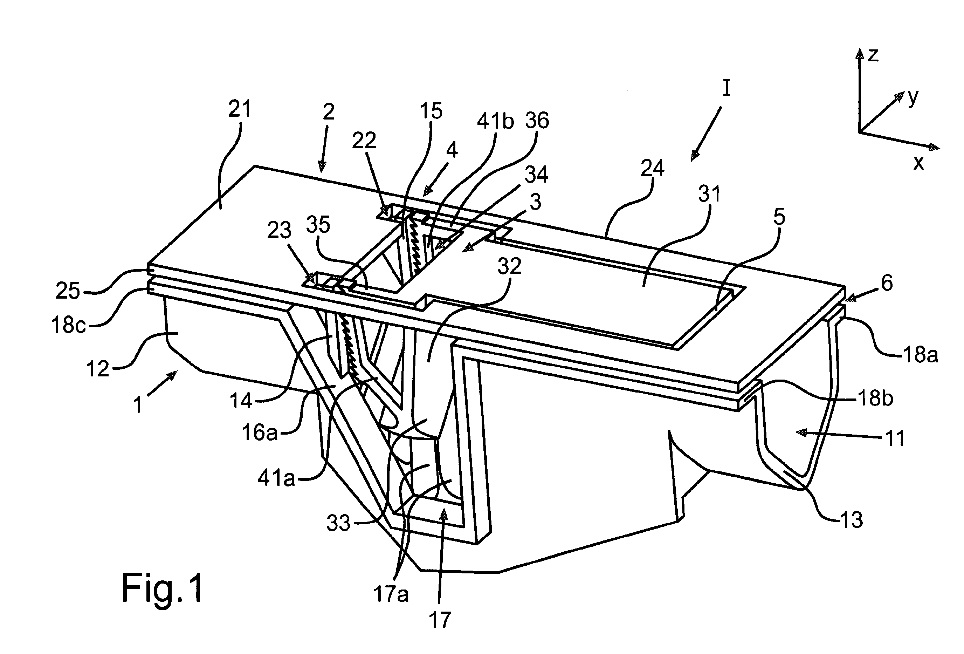

In Fig. 1 ist in schematischer Weise eine Kabelaufnahmevorrichtung I in perspektivischer Darstellung gezeigt. Die Kabelaufnahmevorrichtung I ist im geschlossenen Zustand gezeigt und umfasst einen Grundkörper 1, welcher eine langgestreckte Struktur aufweist und kanalförmig ausgebildet ist. Darüber hinaus umfasst die Kabelaufnahmevorrichtung I ein Oberteil 2, welches zum Abdecken eines Aufnahmebereichs 11 des Grundkörpers 1 vorgesehen ist und mit dem Grundkörper 1 fest und unlösbar verbunden ist. Diese unlösbare Verbindung ist derart ausgebildet, dass die beiden Teile, Grundkörper 1 und Oberteil 2, relativ zueinander bewegbar sind. Im Ausführungsbeispiel ist dazu ein Filmscharnier 6 vorgesehen, welches an einer Längsseite ausgebildet ist. Das Oberteil 2 kann dadurch ausgehend von der gezeigten geschlossenen Position nach oben geklappt werden und über das Filmscharnier 6 geschwenkt werden.

Damit das Oberteil 2 im gezeigten geschlossenen Zustand der Kabelaufnahmevorrichtung I fest mit dem Grundkörper 1 fixiert werden kann, sind an den zum Filmscharnier 6 gegenüberliegenden Randbereichen nicht dargestellte Rastelemente ausgebildet, mittels welchen das Oberteil 2 mit dem Grundkörper 1 verrastet werden kann. Diese Rastmechanik kann bei dem erwünschten Öffnen dieser Kabelaufnahmevorrichtung I von außen zugänglich betätigt werden und somit einfach geöffnet werden.

In der gezeigten Ausführung umfasst der Grundkörper I in Längsrichtung der Anordnung an gegenüberliegenden Enden Auflagebereiche 12 und 13. Diese Auflagebereiche 12 und 13 sind als Senken ausgebildet und umfassen jeweils zwei im Wesentlichen vertikal orientierte Stege, welche nach unten V-förmig verjüngt ausgebildet sind. Die Kabel können im Aufnahmebereich 11 auf diese Auflagebereiche 12 und 13 aufgelegt werden und werden durch diese V-Form bereits automatisch gebündelt und zentriert mittig gehalten.

Zwischen diesen Auflagebereichen 12 und 13 ist in Längsrichtung an gegenüberliegenden Seiten des Aufnahmebereichs 11 ein Rastelement 14 und ein Rastelement 15 einstückig ausgebildet und integral mit dem Grundkörper 1 ausgebildet. Die Rastelemente 14 und 15 sind als starre formsteife Elemente konzipiert, welche beim Einrasten oder Lösen im Wesentlichen positionsstabil bleiben.

Im Ausführungsbeispiel ist die gesamte Kabelaufnahmevorrichtung I aus Kunststoff ausgebildet und einstückig hergestellt.

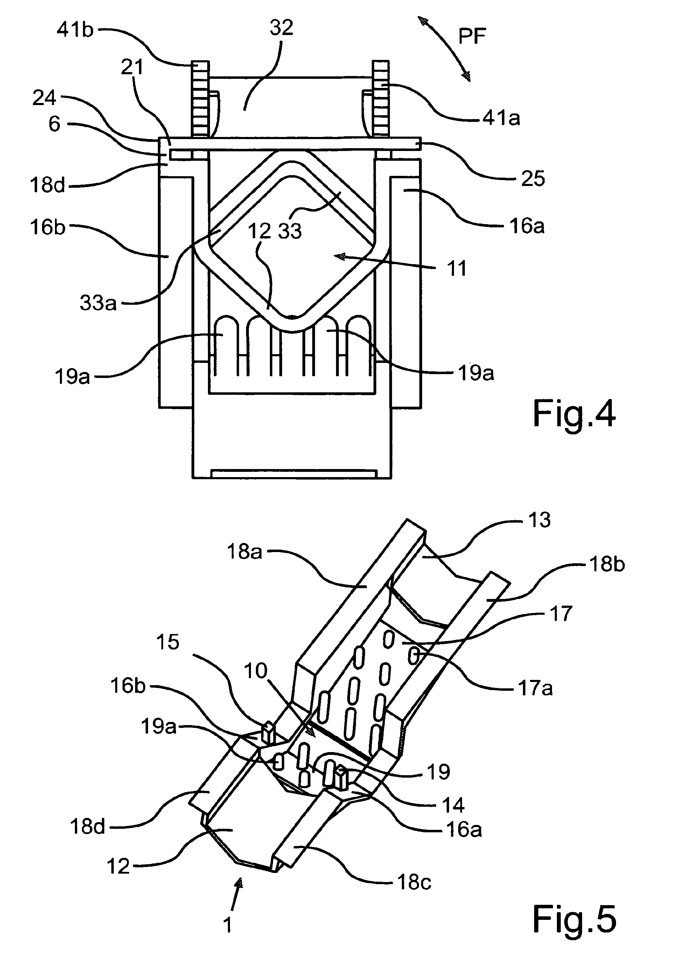

Diese Rastelemente 14 und 15 sind stabförmig ausgebildet und erstrecken sich im Wesentlichen vertikal nach oben (z-Richtung). In der gezeigten Ausführung sind diese Rastelemente 14 und 15 an schräg verlaufenden Stegen 16a und 16b (Fig. 5) angeordnet. Darüber hinaus ist in der Trägerstruktur des Grundkörpers 1 zwischen den Auflagebereichen 12 und 13 ein erstes Bodenelement 17 ausgebildet, an welchem eine Mehrzahl von Stabilisierungselementen angeordnet sind, welche sich als Stäbe 17a in Richtung des Aufnahmebereichs 11 erstrecken.

An der dem Oberteil 2 zugewandten Seite des Grundkörpers 1 sind in Längsrichtung (x-Richtung) Stege 18a, 18b, 18c und 18d ausgebildet, auf denen eine Basisplatte 21 des Oberteils 2 aufliegt. Wie zu erkennen ist, wird im Ausführungsbeispiel der Aufnahmebereich 11 an der Oberseite durch diese Basisplatte 21 im Wesentlichen vollständig abgedeckt. Die Basisplatte 21 erstreckt sich in ihren Ausmaßen in der x-y-Ebene im Wesentlichen über die gesamten Ausmaße der kanalartigen Ausdehnung des Grundkörpers 1.

In dieses Oberteil 2 ist eine Fixierungsvorrichtung 3 integriert und unlösbar mit der Basisplatte 21 verbunden. Die Fixierungsvorrichtung 3 ist dabei relativ bewegbar zu dieser Basisplatte 21 ausgebildet und zum wiederholbaren gleichwirkenden und gleich ablaufenden Funktionsprinzip konzipiert. Diese Fixierungsvorrichtung 3 umfasst im Ausführungsbeispiel ein plattenartiges Klappenelement 31, welches in der Basisplatte 21 integral ausgebildet ist und über ein Filmscharnier 5 unlösbar mit dieser Basisplatte 21 verbunden ist. Das Klappenelement 31 ist in Längsrichtung (x-Richtung) zum Grundkörper 1 am Oberteil 2 ausgebildet, wobei das Filmscharnier 5 quer zur Längsrichtung des Grundkörpers 1 liegt. An der dem Aufnahmebereich 11 zugewandten Unterseite dieses plattenartigen Klappenelements 31 ist ein bügelartiges Halteelement 33 mittels einem Haltesteg 32 in einem vom Filmscharnier 5 entfernt liegenden Bereich befestigt. Der Haltesteg 32 und das bügelartige Halteelement 33 sind dabei stempelförmig ausgebildet. Sowohl der Haltesteg 32 als auch das Halteelement 33 sind als starre formstabile Komponenten ausgebildet.

Des Weiteren sind an dem Klappenelement 31 an gegenüberliegenden Seiten Arme 35 und 36 ausgebildet. An dieser Fixierungsvorrichtung 3 ist eine Arretierungseinrichtung 4 befestigt und insbesondere einstücktig mit der Fixierungsvorrichtung 3 ausgebildet. Die Arretierungseinrichtung 4 ist dadurch unlösbar mit der Fixierungsvorrichtung 3 und somit auch unlösbar mit dem Oberteil 2 verbunden.

Diese Arretierungseinrichtung 4 umfasst Rastelemente 41a und 41 b, wobei das Rastelement 41a stabförmig und gewinkelt ausgebildet ist und mit gegenüberliegenden Enden einerseits an dem Arm 35 und andererseits an dem Haltesteg 32 und/oder dem bügelartigen Halteelement 33 befestigt ist. In analoger Weise ist das Rastelement 41 b ausgebildet und mit seinen gegenüberliegenden Enden an dem Arm 36 einerseits und an dem Haltesteg 32 und/oder dem bügelartigen Halteelement 33 angeordnet. Wie die Darstellung gemäß Fig. 1 zeigt, greifen diese Rastelemente 41 a und 41 b über daran ausgebildeten sägezahnförmigen Profilen in entsprechend ausgebildete sägezahnförmige Profile der Rastelemente 14 und 15 ein. Wie zu erkennen ist, sind in der Basisplatte 21 Aussparungen 22 und 23 ausgebildet, durch welche sich diese Rastelemente 15 bzw. 14 erstrecken.

Die Rastelemente 14 und 15 werden an ihren freien oberen Enden in diese Aussparungen 22 und 23 stützend gehalten, wenn eine Krafteinwirkung durch die Rastelemente 41 a und 41 b auf die Rastelemente 14 und 15 erfolgt und gegebenenfalls ein geringfügiges Biegen dieser nach hinten eintritt. Durch die Arme 35 und 36 sowie das Klappenelement 31 wird ein von außen zugänglicher Eingriffsbereich 34 ausgebildet, welcher ermöglicht, dass die im geschlossenen Zustand gezeigte Kabelaufnahmevorrichtung I einfach geöffnet werden kann. Durch diesen Eingriffsbereich 34 kann in einfacher und aufwandsarmer Weise die Arretierungseinrichtung 4 und insbesondere die verrastete Anordnung zwischen den Rastelementen 41 a, 41 b und 14 und 15 gelöst werden, wodurch die Fixierungsvorrichtung 3 und insbesondere das plattenartige Klappenelement 31 über das Filmscharnier 5 nach oben geschwenkt werden kann. Die Fixierungsvorrichtung 3 kann dadurch individuell im Hinblick auf die im Aufnahmebereich 11 zu haltenden Kabel eingestellt werden, ohne dass die gesamte Kabelaufnahmevorrichtung I geöffnet werden muss, insbesondere dass das Oberteil 2 über das Filmscharnier 6 zur Seite geschwenkt werden muss. Im Ausführungsbeispiel ist dieses Filmscharnier 6 an dem Randbereich 24 der Basisplatte 21 und den Randbereichen der Stege 18a und 18d ausgebildet und erstreckt sich in Längsrichtung (x-Richtung) über die gesamte Länge dieser beiden Stege 18a und 18d.

Die Fixierungsvorrichtung 3 und die Arretierungseinrichtung 4 sind im geschlossenen Zustand dieser Kabelaufnahmevorrichtung I vollständig innerhalb dieser angeordnet. Das plattenartige Klappenelement 31 erstreckt sich dabei im Wesentlichen in der Ebene der Basisplatte 21. Es kann jedoch auch vorgesehen sein, dass die in dem Aufnahmebereich 11 angeordneten Kabel in Anzahl und Durchmesser so ausgebildet sind, dass die Fixierungsvorrichtung 3 und insbesondere das Klappenelement 31 bei einer festen Halterung dieser Kabel nach oben hin wegsteht und schräggestellt ist. Aufgrund der Arretierungseinrichtung 4 kann jedoch auch diese Funktionsstellung der Fixierungsvorrichtung 3 problemlos gehalten werden und die im Aufnahmebereich 11 angeordneten Kabel in allen Raumrichtungen fixiert werden. Neben der bereits erwähnten vorteilhaften Ausgestaltungen der Auflagebereiche 12 und 13 tragen dazu die Stäbe 17a bei. Durch diese Strukturierung kann ein Verrutschen der Kabel in Längsrichtung (x-Richtung) verhindert werden. Dazu drückt das bügelartige Halteelement 32 von oben auf die eingelegten Kabel und drückt diese an diese Stäbe 17a an. Die genaue Anordnung dieser Stäbe 17a und des Halteelements 33 wird in nachfolgenden Figuren noch näher erläutert.

Da das an dem Klappenelement 31 angeordnete Konstrukt umfassend den Haltesteg 32, das Halteelement 33 und die Rastelemente 41 a und 41 b relativ großförmig ausgebildet sind, ist an den Wandstrukturen des Grundkörpers 1 zwischen dem Auflagebereich 12 und dem Auflagebereich 13 eine Öffnung ausgebildet, durch welche sich die Komponenten bewegen können, wenn das Oberteil 2 über das Filmscharnier 6 nach oben geschwenkt wird.

Die zum Arretieren und positionsstabilen Anordnen des Oberteils 2 zum Unterteil 1 vorgesehene Rastmechanik ist bevorzugt in den Randbereich 25 der Basisplatte 21 und den Stegen 18b und 18c des Grundkörpers 1 integriert.

Neben der Funktion als Auflagebereiche und Befestigungsbereiche dienen die Stege 18a bis 18b sowie die Stege 16a und 16b auch zur mechanischen Stabilisierung des Grundkörpers 1.

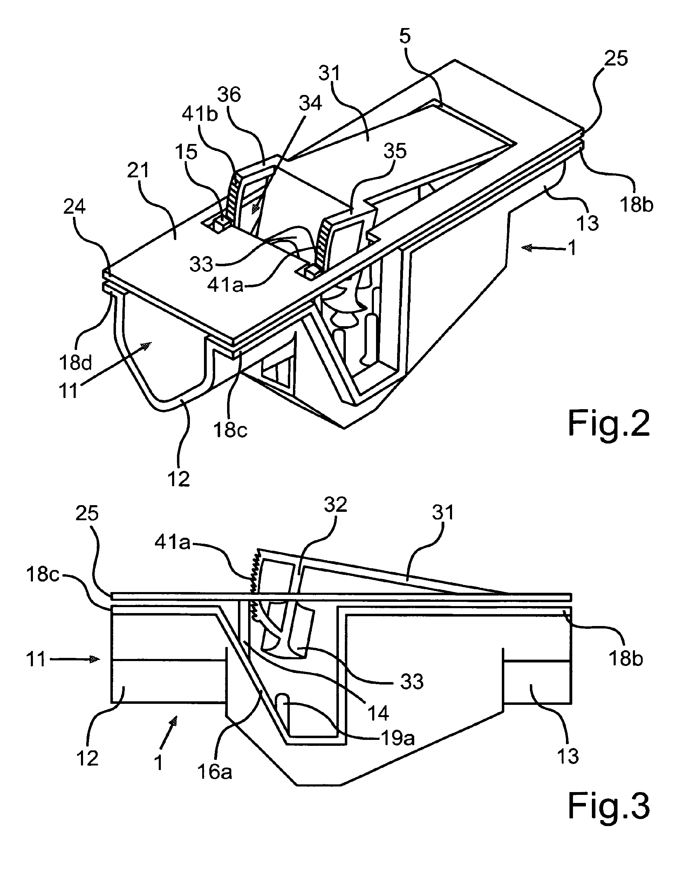

In Fig. 2 ist eine perspektivische Darstellung der Kabelaufnahmevorrichtung I gezeigt, bei der das Oberteil 2 auf dem Grundkörper 1 diesen abdeckend aufliegt und somit die Kabelaufnahmevorrichtung I diesbezüglich geschlossen ist. Des Weiteren ist jedoch zu erkennen, dass die Fixierungsvorrichtung 3 geöffnet ist und über das Filmscharnier 5 das plattenartige Klappenelement 31 nach oben geschwenkt ist. Die Verrastung zwischen dem Rastelement 41a und dem Rastelement 14 sowie zwischen dem Rastelement 41b und dem Rastelement 15 ist gelöst. Dies kann durch einen einfachen Eingriff in den Eingriffsbereich 34 gewährleistet werden. Durch einfaches Drücken auf das plattenartige Klappenelement 31 kann wiederum ein aufwandsarmes und dennoch zuverlässiges Schließen und somit ein Fixieren von den im Aufnahmebereich 11 angeordneten, in den Fig. 1 und 2 jedoch nicht gezeigten Kabeln gewährleistet werden.

Wie aus den Darstellungen in Fig. 1 und 2 zu erkennen ist, ist die Kabelaufnahmevorrichtung I und insbesondere die Ausgestaltung der Fixierungsvorrichtung 3 sowie der Arretierungseinrichtung 4 symmetrisch zur Längsachse (x-Richtung) konzipiert. Sowohl die Fixierung als auch die Arretierung kann dadurch an allen Stellen relativ gleichmäßig ermöglicht werden.

In Fig. 3 ist eine schematische Seitenansicht der Darstellung in Fig. 2 gezeigt. Der relativ schmale Haltesteg 32 ist dabei zur Befestigung des bügelartigen Halteelements 33 konzipiert, wobei dieses Halteelement 33 flächige Platten aufweist. Wie in nachfolgenden Figuren noch dargestellt und beschrieben wird, ist dieses Halteelement 33 im Ausführungsbeispiel ebenfalls V-förmig gestaltet.

Die Innenseiten dieses Halteelements 33, welche dem Aufnahmebereich 11 und somit den Kabeln zugewandt sind, sind im Ausführungsbeispiel glatt ausgebildet. Es kann jedoch auch vorgesehen sein, dass diese Innenseiten des Halteelements 33 ebenfalls dahingehend strukturiert sind, dass sie ein Verrutschen der Kabel zumindest in Längsrichtung verhindern können. Dazu kann beispielsweise vorgesehen sein, dass auch an dieser Innenseite des Halteelements 33 noppenartige oder rippenartige oder stiftartige Elemente ausgebildet sind.

Ebenso kann vorgesehen sein, dass anstatt der Stabilisierungselemente bzw. der Stäbe 19a in Querrichtung (y-Richtung) verlaufende Rippen ausgebildet sind. In einer Seitenansicht, wie sie in Fig. 3 dargestellt ist, wäre dann in diesem Bereich eine wellenförmige oder gezackte Struktur zu erkennen, wenn eine Mehrzahl solcher in y-Richtung orientierter Elemente in x-Richtung hintereinander angeordnet werden.

Fig. 4 zeigt eine Vorderansicht der Darstellungen gemäß Fig. 2 und Fig. 3. Es wird dabei zentral in den Aufnahmebereich 11 hineingesehen. In der Darstellung gemäß Fig. 4 ist die gegenüberliegende Anordnung der Rastelemente 41a und 41b zu erkennen, wodurch diese seitlich am Aufnahmebereich 11 angeordnet sind. Des Weiteren ist das am Randbereich 24 und am Randbereich 18d ausgebildete Filmscharnier 6 zu erkennen und durch den Doppelpfeil PF die Schwenkrichtung des Oberteils 2 relativ zum Grundkörper 1 angedeutet.

Des Weiteren ist die V-förmige Ausgestaltung des Halteelements 33 und die glatte Innenseite 33a zu erkennen.

In Fig. 5 ist eine perspektivische Draufsicht auf den Grundkörper 1 gezeigt. Beidseitig zum Aufnahmebereich 11 sind dabei die waagrecht (y-Richtung) flügelartig ausgebildeten Stege 18a bis 18d zu erkennen. Darüber hinaus zeigt Fig. 5, dass in Längsrichtung (x-Richtung) zwischen den V-förmigen Auflagebereichen 12 und 13 das erste Bodenelement 17 mit daran angeordneten Stäben 17a ausgebildet ist. Ein weiteres kleineres Bodenelement 19 ist benachbart zum Auflagebereich 12 ausgebildet und umfasst daran angeordnete Stäbe 19a. In Längsrichtung zwischen diesen Bodenelementen 17 und 19 ist eine durchgängige Aussparung 10 ausgebildet. Im geschlossenen Zustand der Fixierungsvorrichtung 3, wie dies beispielsweise in Fig. 1 gezeigt ist, ist das Halteelement 33 im Wesentlichen über dieser Aussparung 10 positioniert. Durch diese Ausgestaltung des Grundkörpers 1 kann die sichere Auflage auf den Auflagebereichen 12 und 13 gewährleistet werden. Darüber hinaus kann durch die Stäbe 17a und 19a ein sicheres Fixieren im Hinblick auf ein Verrutschen in Längsrichtung des Kabels verhindert werden. Des Weiteren kann über die Fixierungsvorrichtung 3 und insbesondere das Halteelement 33 eine Krafteinwirkung auf die zu fixierenden Kabel erfolgen, so dass diese zwischen den Bodenelementen 17 und 19 etwas in Richtung der durchgängigen Aussparung 10 gedrückt werden und dadurch etwas nach unten gedrückt werden. Auch dies beeinflusst die Fixierung der Kabel nochmals positiv.

Neben der V-förmigen Gestaltung der Auflagebereiche 12 und 13 und/oder des Halteelements 33, können diese Komponenten auch vielfältig anderweitig ausgestaltet sein. So kann beispielsweise auch eine W-Form vorgesehen sein.

## Patentansprüche

1. Aufnahmevorrichtung für zumindest einen länglichen Gegenstand, insbesondere Kabel, mit einem kanalförmigen Grundkörper (1), welcher einen Aufnahmebereich (11) zum Aufnehmen des länglichen Gegenstands aufweist, und einem zum Abdecken des Aufnahmebereichs (11) an dem Grundkörper (1) angeordneten Oberteil (2), **dadurch gekennzeichnet, dass** die Aufnahmevorrichtung eine Fixierungsvorrichtung (3) zur Fixierung des länglichen Gegenstands aufweist, welche unlösbar und bewegbar mit dem Oberteil (2) verbunden und in das Oberteil (2) integriert ist und welche eine Arretierungseinrichtung (4) aufweist, die zur Arretierung zumindest der Fixierungsvorrichtung (3) an dem Grundkörper (1) ausgebildet ist.

2. Aufnahmevorrichtung nach Anspruch 1, **dadurch gekennzeichnet, dass** das Oberteil (2) einstückig mit der Fixierungsvorrichtung (3) und der Arretierungseinrichtung (4) ausgebildet ist.

3. Aufnahmevorrichtung nach Anspruch 1 oder 2, **dadurch gekennzeichnet, dass** sich die Fixierungsvorrichtung (3) und/oder die Arretierungseinrichtung (4) im geschlossenen Zustand in den Aufnahmebereich (11) hineinerstrecken, insbesondere vollständig in der Aufnahmevorrichtung angeordnet sind.

4. Aufnahmevorrichtung nach einem der vorhergehenden Ansprüche, **dadurch gekennzeichnet, dass** die Fixierungsvorrichtung (3) einen Eingriffsbereich (34) aufweist, durch welchen eine geschlossene Fixierungsvorrichtung (3) von außen zugänglich geöffnet werden kann und/oder die Arretierungseinrichtung (4) lösbar ist.

5. Aufnahmevorrichtung nach einem der vorhergehenden Ansprüche, **dadurch gekennzeichnet, dass** die Fixierungsvorrichtung (3) ein plattenartiges Klappenelement (31) aufweist, welches bewegbar an einer Basisplatte (21) des Oberteils (2) angeordnet ist.

6. Aufnahmevorrichtung nach Anspruch 4 und 5, **dadurch gekennzeichnet, dass** der Eingriffsbereich (34) in dem Klappenelement (31) ausgebildet ist.

7. Aufnahmevorrichtung nach Anspruch 5 oder 6, **dadurch gekennzeichnet, dass** das Klappenelement (31) und die Basisplatte (21) durch ein Scharnier, insbesondere ein Filmscharnier (5), verbunden sind.

8. Aufnahmevorrichtung nach einem der Ansprüche 5 bis 7, **dadurch gekennzeichnet, dass** an der dem Aufnahmebereich (11) zugewandten Seite des Klappenelements (31) ein bügelartiges Halteelement (33) zur Fixierung des länglichen Gegenstands angeordnet ist.

9. Aufnahmevorrichtung nach Anspruch 7 und 8, **dadurch gekennzeichnet, dass** das Klappenelement (31) in Längsrichtung (x-Richtung) zum Grundkörper (1) ausgebildet ist, wobei das Scharnier (5) quer zu der Längsrichtung und das Halteelement (33) an einem entfernt vom Scharnier legenden Bereich am Klappenelement (31) angeordnet sind.

10. Aufnahmevorrichtung nach Anspruch 8 oder 9, **dadurch gekennzeichnet, dass** das bügelartige Halteelement (33) im geschlossenen Zustand der Fixierungsvorrichtung (3) einer durchgängigen Aussparung (10) im Aufnahmebereich (11) gegenüberliegt.

11. Aufnahmevorrichtung nach einem der vorhergehenden Ansprüche, **dadurch gekennzeichnet, dass** die Arretierungseinrichtung als Rasteinrichtung (4) ausgebildet ist.

12. Aufnahmevorrichtung nach Anspruch 11, **dadurch gekennzeichnet, dass** die Rasteinrichtung (4) zumindest ein erstes längliches starres Rastelement (41 a, 41 b) aufweist, welches an der Fixierungsvorrichtung (3) angeordnet ist und ein zum Verrasten ausgebildetes Profil, insbesondere sägezahnförmiges Profil, aufweist.

13. Aufnahmevorrichtung nach Anspruch 12 und einem der Ansprüche 5 bis 10, **dadurch gekennzeichnet, dass** das erste Rastelement (41 a, 41 b) mit einem an dem Klappenelement (31) ausgebildeten Arm (35, 36) und mit dem bügelartigen Haltelement (33) verbunden ist.

14. Aufnahmevorrichtung nach einem der vorhergehenden Ansprüche, **dadurch gekennzeichnet, dass** an dem Grundkörper (1) zumindest ein starres Arretierungselement (14, 15), insbesondere ein zweites längliches Rastelement, ausgebildet ist, welches zum Eingriff mit der Arretierungseinrichtung (4), ausgebildet ist.

15. Aufnahmevorrichtung nach Anspruch 14, **dadurch gekennzeichnet, dass** das zweite Rastelement (14, 15) an einem den Aufnahmebereich (11) begrenzenden Steg (16a, 16b) ausgebildet ist und sich im Wesentlichen vertikal zur Längsrichtung des Grundkörpers (1) erstreckt.

16. Aufnahmevorrichtung nach einem der vorhergehenden Ansprüche, **dadurch gekennzeichnet, dass** der Grundkörper (1) an den gegenüberliegenden Enden jeweils einen Auflagebereich (12, 13) aufweist.

17. Aufnahmevorrichtung nach Anspruch 16, **dadurch gekennzeichnet, dass** die Auflagebereiche (12, 13) als Senken ausgebildet sind.

18. Aufnahmevorrichtung nach einem der vorhergehenden Ansprüche, **dadurch gekennzeichnet, dass** der Grundkörper (1) zumindest ein Bodenelement (17, 19) aufweist, an dem Stabilisierungselemente ausgebildet sind, die den länglichen Gegenstand im geschlossenen Zustand der Fixierungsvorrichtung fixieren.

19. Aufnahmevorrichtung nach Anspruch 18, **dadurch gekennzeichnet, dass** die Stabilisierungselemente, insbesondere Stäbe (17a, 19a), in den Aufnahmebereich (11) ragen.

20. Aufnahmevorrichtung nach einem der vorhergehenden Ansprüche, **dadurch gekennzeichnet, dass** die dem Aufnahmebereich (11) zugewandte Seite des Halteelements 33 eine Struktur aufweist.

21. Aufnahmevorrichtung nach einem der vorhergehenden Ansprüche, **dadurch gekennzeichnet, dass** das Oberteil (2) und der Grundkörper (1) mittels eines Filmscharniers (6) verbunden sind und über eine lösbare Verbindung, insbesondere eine Rastmechanik, verschließbar sind.

22. Aufnahmevorrichtung nach einem der vorhergehenden Ansprüche, welche einstückig ausgebildet ist, insbesondere aus Kunststoff ausgebildet ist.

## Claims

1. Receiving device for at least one elongate article, particularly cable, with a channel-shaped base body (1), which has a receiving region (11) for receiving the elongate article, and an upper part (2) arranged at the base body (1) to cover the receiving region (11), **characterised in that** the receiving device comprises a fixing device (3) for fixing the elongate article, which is non-detachably and movably connected with the upper part (2) and integrated in the upper part (2) and which has a locking device (4) constructed for locking at least the fixing device (3) to the base body (1).

2. Receiving device according to claim 1, **characterised in that** the upper part (2) is formed integrally with the fixing device (3) and the locking device (4).

3. Receiving device according to claim 1 or 2, **characterised in that** in the closed state the fixing device (3) and/or the locking device (4) extend into the receiving region (11), particularly are arranged completely within the receiving device.

4. Receiving device according to any one of the preceding claims, **characterised in that** the fixing device (3) has an engagement region (34) by which a closed fixing device (4) can be opened by access from the outside and/or the locking device (4) is releasable.

5. Receiving device according to any one of the preceding claims, **characterised in that** the fixing device (3) has a plate-shaped flap element (31) which is arranged at a base plate (21) of the upper part (2) to be movable.

6. Receiving device according to claim 4 and 5, **characterised in that** the engagement region (34) is formed in the flap element (31).

7. Receiving device according to claim 5 or 6, **characterised in that** the flap element (31) and the base plate (21) are connected by a hinge, particularly a film hinge (5).

8. Receiving device according to any one of claims 5 to 7, **characterised in that** a yoke-like holding element (33) for fixing the elongate article is arranged at the side of the flap element (31) facing the receiving region (11).

9. Receiving device according to claim 7 and 8, **characterised in that** the flap element (31) is formed in longitudinal direction (x direction) with respect to the base body (1), wherein the hinge (5) is arranged transversely to the longitudinal direction and the retaining element (33) is arranged at a region, which is remote from the hinge, at the flap element (31).

10. Receiving device according to claim 8 or 9, **characterised in that** the yoke-like holding element (33) in the closed state of the fixing device (3) is opposite a continuous cut-out (10) in the receiving region (11).

11. Receiving device according to any one of the preceding claims, **characterised in that** the locking device is constructed as a detent device (4).

12. Receiving device according to claim 11, **characterised in that** the detent device (4) has at least one first elongate, rigid detent element (41 a, 41 b), which is arranged at the fixing device (3) and has a profile constructed for detenting, particularly a sawtooth-shaped profile.

13. Receiving device according to claim 12 and one of claims 5 to 10, **characterised in that** the first detent element (41 a, 41 b) is connected with an arm (35, 36), which is constructed at the flap element (31), and with the yoke-like holding element (33).

14. Receiving device according to any one of the preceding claims, **characterised in that** at least one rigid locking element (14,1 5), particularly a second elongate detent element, which is constructed for engagement with the locking device (4) is constructed at the base body (1).

15. Receiving device according to claim 14, **characterised in that** the second detent element (14, 15) is constructed at a web (16a, 16b), which bounds the receiving region (11), and extends substantially vertically with respect to the longitudinal direction of the base body (1).

16. Receiving device according to any one of the preceding claims, **characterised in that** base body (1) has a respective support region (12, 13) at the opposite ends.

17. Receiving device according to claim 16, **characterised in that** the support regions (12, 13) are constructed as depressions.

18. Receiving device according to any one of the preceding claims, **characterised in that** the base body (1) has at least one base element (17, 19) at which are constructed stabilising elements fixing the elongate article in the closed state of the fixing device.

19. Receiving device according to claim 18, **characterised in that** the stabilising elements, particularly rods (17a, 19a), project into the receiving region (11).

20. Receiving device according to any one of the preceding claims, **characterised in that** the side, which faces a receiving region (11) of the holding element (33), has a structure.

21. Receiving device according to any one of the preceding claims, **characterised in that** the upper part (2) and the base body (1) are connected by means of a film hinge (6) and are closable by way of a releasable connection, particularly a detent mechanism.

22. Receiving device according to any one of the preceding claims, which is of integral construction, in particular is constructed from plastics material.

## Revendications

1. Dispositif de logement pour au moins un objet allongé, notamment un câble, comprenant un corps de base (1) en forme de canal, lequel présente une zone de logement (11) destinée à loger l'objet allongé, et comprenant une partie supérieure (2) disposée sur le corps de base (1) pour recouvrir la zone de logement (11), **caractérisé en ce que** le dispositif de logement présente un dispositif de fixation (3) pour la fixation de l'objet allongé, lequel dispositif de fixation est relié de manière inamovible et déplaçable avec la partie supérieure (2) et est intégré dans la partie supérieure (2), et lequel présente un dispositif de blocage (4) qui est réalisé pour le blocage au moins du dispositif de fixation (3) sur le corps de base (1).

2. Dispositif de logement selon la revendication 1, **caractérisé en ce que** la partie supérieure (2) est réalisée d'une seule pièce avec le dispositif de fixation (3) et le dispositif de blocage (4).

3. Dispositif de logement selon la revendication 1 ou 2, **caractérisé en ce que** le dispositif de fixation (3) et/ou le dispositif de blocage (4), à l'état fermé, s'étendent dans la zone de logement (11), notamment qu'ils sont entièrement disposés dans le dispositif de logement.

4. Dispositif de logement selon l'une quelconque des revendications précédentes, **caractérisé en ce que** le dispositif de fixation (3) présente une zone de prise (34) au moyen de laquelle un dispositif de fixation fermé (3) peut être ouvert en étant accessible de l'extérieur et/ou (au moyen de laquelle) le dispositif de blocage (4) est amovible.

5. Dispositif de logement selon l'une quelconque des revendications précédentes, **caractérisé en ce que** le dispositif de fixation (3) présente un élément à clapet (31) en forme de plaque, lequel est disposé de manière déplaçable sur une plaque de base (21) de la partie supérieure (2).

6. Dispositif de logement selon les revendications 4 et 5, **caractérisé en ce que** la zone de prise (34) est réalisée dans l'élément à clapet (31).

7. Dispositif de logement selon la revendication 5 ou 6, **caractérisé en ce que** l'élément à clapet (31) et la plaque de base (21) sont reliés par une charnière, notamment une charnière à film (5).

8. Dispositif de logement selon l'une quelconque des revendications 5 à 7, **caractérisé en ce qu'**un élément de maintien (33) en forme d'étrier destiné à la fixation de l'objet allongé est disposé sur le côté de l'élément à clapet (31) tourné vers la zone de logement (11).

9. Dispositif de logement selon les revendications 7 et 8, **caractérisé en ce que** l'élément à clapet (31) est réalisé en sens longitudinal (sens x) par rapport au corps de base (1), la charnière (5) étant disposée transversalement au sens longitudinal et l'élément de maintien (33) étant disposé sur l'élément à clapet (31), sur une partie située de manière éloignée de la charnière.

10. Dispositif de logement selon la revendication 8 ou 9, **caractérisé en ce que** l'élément de maintien (33) en forme d'étrier, à l'état fermé du dispositif de fixation (3), est situé à l'opposé d'un évidement continu (10) dans la zone de logement (11).

11. Dispositif de logement selon l'une quelconque des revendications précédentes, **caractérisé en ce que** le dispositif de blocage est réalisé comme dispositif d'enclenchement (4).

12. Dispositif de logement selon la revendication 11, **caractérisé en ce que** le dispositif d'enclenchement (4) présente au moins premier un élément d'enclenchement (41 a, 41b) allongé rigide, lequel est disposé sur le dispositif de fixation (3), et présente un profil réalisé pour l'enclenchement, notamment un profil en forme de dents de scie.

13. Dispositif de logement selon la revendication 12 et selon l'une quelconque des revendications 5 à 10, **caractérisé en ce que** le premier élément d'enclenchement (41 a, 41b) est relié à un bras (35, 36) réalisé sur l'élément à clapet (31) et à l'élément de maintien (33) en forme d'étrier.

14. Dispositif de logement selon l'une quelconque des revendications précédentes, **caractérisé en ce qu'**au moins un élément de blocage rigide (14, 15), notamment un deuxième élément d'enclenchement allongé, est réalisé sur le corps de base (1), lequel élément d'enclenchement est réalisé pour la prise avec le dispositif de blocage (4).

15. Dispositif de logement selon la revendication 14, **caractérisé en ce que** le deuxième élément d'enclenchement (14, 15) est réalisé sur une nervure (16a, 16b) délimitant la zone de logement (11) et s'étend essentiellement verticalement par rapport au sens longitudinal du corps de base (1).

16. Dispositif de logement selon l'une quelconque des revendications précédentes, **caractérisé en ce que** le corps de base (1) présente sur les extrémités opposées respectivement.une zone d'appui (12, 13).

17. Dispositif de logement selon la revendication 16, **caractérisé en ce que** les zones d'appui (12, 13) sont réalisées comme enfoncements.

18. Dispositif de logement selon l'une quelconque des revendications précédentes, **caractérisé en ce que** le corps de base (1) présente au moins un élément de fond (17, 19) sur lequel sont réalisés des éléments de stabilisation qui fixent l'objet allongé à l'état fermé du dispositif de fixation.

19. Dispositif de logement selon la revendication 18, **caractérisé en ce que** les éléments de stabilisation, notamment des tiges (17a, 19a), sont en saillie dans la zone de logement (11).

20. Dispositif de logement selon l'une quelconque des revendications précédentes, **caractérisé en ce que** le côté de l'élément de maintien (33) tourné vers la zone de logement (11) présente une structure.

21. Dispositif de logement selon l'une quelconque des revendications précédentes, **caractérisé en ce que** la partie supérieure (2) et le corps de base (1) sont reliés au moyen d'une charnière à film (6) et sont fermables par l'intermédiaire d'une liaison amovible, notamment une mécanique d'enclenchement.

22. Dispositif de logement selon l'une quelconque des revendications précédentes, lequel est réalisé d'une seule pièce, notamment en matière plastique.
